(19) Europäisches Patentamt
European Patent Office
Office européen des brevets

(11) **EP 1 927 680 A1**

(12) **EUROPÄISCHE PATENTANMELDUNG**

(43) Veröffentlichungstag:
04.06.2008 Patentblatt 2008/23

(51) Int Cl.:
*C25D 3/44* [(2006.01)]    *C07F 5/06* [(2006.01)]

(21) Anmeldenummer: 06125040.3

(22) Anmeldetag: **29.11.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK RS**

(71) Anmelder: **Aluminal Oberflächentechnik GmbH & Co. KG**
**56412 Montabaur-Heiligenroth (DE)**

(72) Erfinder:
• **Härtel, Matthias, Dr.**
**56412 Montabaur-Heiligenroth (DE)**
• **de Vries, Hans**
**56412 Montabaur-Heiligenroth (DE)**

(74) Vertreter: **Polypatent**
**Postfach 11 07**
**51482 Overath (DE)**

(54) **Elektrolyt zur galvanischen abscheidung von aluminium aus aprotischen lösungsmitteln in einer galvanisiertrommel**

(57)    Die Erfindung betrifft einen Elektrolyten zur galvanischen Abscheidung von Aluminium aus aprotischen Lösungsmitteln enthaltend eine Verbindung der Formel

$$N(R^1)_4 X \bullet (m\text{-}n\text{-}o) Al(C_2H_5)_3 \bullet n\ AlR^2_3 \bullet o\ AlR^3_3, \qquad (I)$$

wobei
$R^1$ eine $C_1$ bis $C_4$ Alkylgruppe ist,
X gleich F, Cl oder Br ist,
m gleich 1 bis 3, vorzugsweise 1,7 bis 2,3 ist,
n gleich 0,0 bis 1,5, vorzugsweise 0,0 bis 0,6 ist,
o gleich 0,0 bis 1,5, vorzugsweise 0,0 bis 0,6 ist
$R^2$, $R^3$ eine $C_1$ oder $C_3$ bis $C_6$ Alkylgruppe ist, wobei $R^2$ ungleich $R^3$ ist.
in einem organischen Lösungsmittel.

Ein weiterer Gegenstand des Patentes ist ein Verfahren zur Herstellung des Elektrolyten, ein Beschichtungsverfahren und die beschichteten Werkstoffteile.

**EP 1 927 680 A1**

Printed by Jouve, 75001 PARIS (FR)

**Beschreibung**

Gegenstand der Erfindung ist ein Elektrolyt zur galvanischen Abscheidung von Aluminium aus aprotischen Lösungsmitteln, vorzugsweise für die Trommelbeschichtung von Werkstoffen. Ein weiterer Gegenstand der Erfindung ist ein Verfahren zur Herstellung des Elektrolyten, die Verwendung des Elektrolyten sowie ein Beschichtungsverfahren und mit dem Verfahren beschichtete Teile.

Es ist bekannt, dass die galvanische Abscheidung von Aluminium aufgrund des sehr niedrigen Spannungspotentiales dieses Metalls nur aus nichtwässrigen Elektrolyten möglich ist.

Grundsätzlich erfolgt die galvanische Abscheidung von Aluminium in nichtwässrigen Systemen unter Verwendung eines Elektrolyten, der organische Aluminiumalkyl-Komplexverbindungen gelöst in organischen aprotischen Lösungsmitteln enthält. Die Beschichtung erfolgt so, dass die zu beschichtenden Werkstoffe in der Elektrolytlösung kathodisch geschaltet werden. Weiterhin befinden sich in der Elektrolytlösung Aluminiumanoden zur Lieferung des notwendigen Aluminiums für die Beschichtung. Beim Anlegen eines Stromes löst sich das Aluminium der Aluminiumanoden auf und wird durch die Elektrolytlösung zu den kathodisch geschalteten Werkstoffen transportiert und dort abgeschieden.

Für die galvanische Abscheidung von Aluminium aus aprotischen Lösungsmitteln sind verschiedene Elektrolytsysteme bekannt geworden. Technische Bedeutung für die Abscheidung von Aluminium im industriellen Maßstab haben jedoch in den letzten Jahren ausschließlich Elektrolytsysteme auf Basis von Aluminiumalkylkomplexen erlangt.

Die elektrolytische Abscheidung von Aluminium aus Aluminiumalkylkomplexen ist bereits in den 50er Jahren durch Ziegler und Lehmkuhl beschrieben worden.

So wird beispielsweise in der DE 1 047 450 AS ein Elektrolyt der Zusammensetzung NaF · 2 Al$(C_2H_5)_3$ beschrieben. Dieser Elektrolyt wurde in einem aromatischen Kohlenwasserstoff wie Toluol eingesetzt. Aluminiumabscheidungen mit diesem Elektrolyten sind von guter Qualität. Der Elektrolyt besitzt jedoch eine schlechte Streufähigkeit. Eine schlechte Streufähigkeit führt dazu, dass insbesondere kompliziert geformte Teile mit Ecken und Kanten nicht oder nur unzureichend mit Aluminium beschichtet werden. Um hier eine gleichmäßige Beschichtung zu erreichen ist der Einsatz von Hilfsanoden notwendig. Hierbei handelt es sich jedoch um ein technisch sehr aufwändiges und teures Verfahren, das im industriellen Maßstab nicht mehr wirtschaftlich durchgeführt werden kann. Es ist daher für eine wirtschaftlich sinnvolle Einsatzmöglichkeit des Elektrolyten notwendig, dass er eine ausreichende Streufähigkeit besitzt.

Zur Erhöhung der Streufähigkeit wurden die Aluminiumalkyl-Komplexe modifiziert. Insbesondere wurde Natriumfluorid ersetzt durch Kaliumfluorid. Diese Komplexe besitzen aufgrund des veränderten Kations eine bessere elektrische Leitfähigkeit und auch eine bessere Streufähigkeit. Der große Nachteil dieser Verbindungen ist jedoch, dass sie relativ hohe Schmelzpunkte besitzen und somit die Löslichkeit der Komplexe in dem aromatischen Lösungsmittel gering ist. Derartige Elektrolytlösungen neigen daher zur Kristallisation und insbesondere bei Lagerung dieser Lösungen werden diese durch die Auskristallisation der entsprechenden Aluminiumalkylverbindungen unbrauchbar. Insbesondere im industriellen Maßstab sind solche Lösungen nur schwer einzusetzen, da es aufgrund der Kristallisationsneigung leicht zu Verstopfungen in Rohrleitungen, Pumpen und Filtern kommen kann.

Zur Lösung dieses Problems wird im Stand der Technik vorgeschlagen, Kaliumfluorid in Mischungen aus verschiedenen Aluminiumalkylkomplexen einzusetzen, die geringere Schmelzpunkte besitzen als die Aluminiumtriethylkomplexe. Hierdurch soll eine bessere Löslichkeit der Systeme erzielt werden. Ein großer Nachteil dieser Elektrolytsysteme ist jedoch, dass sie eine relativ geringe Stromdichtebelastbarkeit besitzen und es dadurch schnell zur Mitabscheidung von Kalium kommen kann, die bei einer Aluminiumabscheidung äußerst unerwünscht ist. Auch ist die thermische Stabilität, insbesondere von Aluminiumtriisobutylkomplexen deutlich geringer als die von Aluminiumtriethylkomplexen. Ein weiterer Nachteil ist, dass bei solche Elektrolytsystemen im industriellen Betrieb ständig die Mischungsverhältnisse der einzelnen Aluminiumalkylverbindungen angepasst werden müssen, um sie konstant zu halten.

Bestimmte Aluminiumalkylverbindungen, wie beispielsweise Aluminiumtrimethyl sind weiterhin so teuer, dass eine wirtschaftliche Durchführung des Verfahrens kaum möglich ist.

Die genannten Elektrolyte sind beispielsweise beschrieben in den Druckschriften EP 0 084 816 A1, EP 0 402 760 A1, EP 0 402 761 A1, DE 196 49 000 C2, EP 1 680 533 A1.

Diese Elektrolytsysteme sind für die Beschichtung von kompliziert geformten Teilen als Gestellware geeignet. Sie weisen jedoch beim Einsatz für die galvanische Beschichtung von Kleinteilen, die in einer Galvanisiertrommel beschichtet werden, gravierende Nachteile auf.

Die galvanische Beschichtung von Kleinteilen und Schüttgut erfolgt üblicherweise in rotierenden, perforierten Trommeln, die mittels Elektromotor angetrieben werden und in einem Kunststoffgehäuse in einem Traggestell angeordnet sind. Die zu beschichtenden Kleinteile werden in die Trommel eingebracht und die Trommel wird in die Elektrolytlösung getaucht. Die Stromübertragung auf die zu beschichtende Ware in der Trommel erfolgt meistens mittels flexibler Kupferlitzen, die seitlich an der Trommel angeordnet sind. Derartige Galvanisiertrommeln sind beispielsweise beschrieben in der WO 03/012176 A1 und der WO 2005/021840 A1.

Bei der Trommelbeschichtung von Massenware werden die zu beschichtenden Kleinteile in rotierenden perforierten Trommeln beschichtet. Dabei wird nur der Teil der Ware, der direkt an der perforierten Wand anliegt und den kürzesten Abstand zur Anode hat, beschichtet. Die Ware im Inneren des Warenpakets in der Trommel wird nicht beschichtet. Die Trommel muss also zwangsläufig sehr oft rotieren, damit die Ware gut durchmischt wird und alle Teile ausreichend lang am inneren Umfang der Trommel für eine gleichmäßige Beschichtung verweilen.

Man bezeichnet die für die Beschichtung effektive Fläche in der Trommel als Hüllfläche. Diese Hüllfläche ist im Verhältnis zu der gesamten Fläche der Kleinteile in der Trommel sehr gering. An dieser Hüllfläche liegt im Vergleich zum Inneren der Trommel eine sehr hohe örtliche Stromdichte an, die abhängig vom Füllgrad der Trommel an der Hüllfläche das Drei- bis Zehnfache der mittleren Stromdichte beträgt, die bezogen auf die Kleinteile in der Trommel verfahrenstechnisch einge-stellt wurde.

Dies bedeutet, dass ein Elektrolyt, der für die Trommelbeschichtung verwendet wird, eine sehr hohe Stromdichtebelastbarkeit aufweisen muss, da die Verteilung der Stromdichte in der Trommel nicht gleichmäßig ist, sondern an der Hüllfläche erheblich höher ist als im Inneren der Trommel.

Für die wirtschaftliche Beschichtung von Massenwaren in einer Trommel muss daher ein entsprechend geeigneter Beschichtungselektrolyt eine sehr hohe Stromdichtebelastbarkeit aufweisen, um unnötig lange Laufzeiten bei der Beschichtung in der Trommel zu vermeiden. Wenn die Laufzeiten in der Trommel zu lang sind, können die Teile durch die Rotation der Trommel und das gegenseitige Aneinanderreiben beschädigt werden und sind weiterhin auch erhöhtem Abrieb ausgesetzt. Dies ist insbesondere bei Gewindeteilen oder Präzisionsteilen kritisch.

Die bisher eingesetzten metallorganischen Elektrolytsysteme für die Aluminiumabscheidung besitzen nur eine relativ geringe maximale Stromdichtebelastbarkeit. Sie haben den Nachteil, dass, sobald eine maximale Grenzstromdichte überschritten wird, unerwünschte Nebenreaktionen entstehen und die Schichtqualität stark beeinträchtigt wird. Weiterhin wird durch die hohe Stromdichte auch die Lebensdauer des Elektrolyten stark reduziert. Ein häufiger Wechsel des Elektrolyten führt aber auch dazu, dass das Beschichtungsverfahren zu teuer und unwirtschaftlich wird.

Es wurde festgestellt, dass insbesondere Elektrolytsysteme, die auf alkalimetallfluoridhaltigen Komplexsalzen, wie beispielsweise Kaliumfluorid oder Natriumfluorid, basieren und für die Beschichtung von Gestellware verwendet werden für den Einsatz als Elektrolyt für die Beschichtung von Kleinteilen in Trommeln nicht gut geeignet sind und erhebliche Nachteile aufweisen.

So entstehen beim Überschreiten der Grenzstromdichte durch die hohe Stromdichtebelastbarkeit Coabscheidungen von Alkalimetallen auf den zu beschichtenden Kleinteilen. Dadurch wird die Aluminiumabscheidung gestört und die Korrosionsbeständigkeit der abgeschiedenen Schicht negativ beeinflusst. Dies gilt insbesondere für die kaliumfluoridhaltigen Komplexe, die eine bessere Streufähigkeit im Vergleich zu den Natriumfluoridkomplexen besitzen.

Ein weiterer Nachteil ist es, dass Natriumfluorid- und Kaliumfluorid-Aluminiumalkylkomplexe bei Belastung mit hohen Stromdichten zu einem dendritischen Kristallwachstum neigen. Dabei scheiden sich meistens an den Kanten der zu beschichtenden Teilen oder auch an herausragenden Teilen der Galvanisiertrommel unregelmäßige Aufwachsungen (Wildwachstum) von Aluminium ab. Diese Dendrite sind brüchig und werden in der Trommel zu losen Partikeln zermahlen und während der Beschichtung als Ablagerung auf der zu beschichtenden Ware aufplattiert und teilweise in die Beschichtung eingebaut. Die beschichteten Produkte sind dadurch unbrauchbar.

So führen beispielsweise Ablagerungen in den Gewinden von Kleinteilen zu einer Nichtgängigkeit oder zu hohen Reibungswerten beim Einschrauben oder es werden die Toleranzen der Kleinteile nicht eingehalten.

Ein weiterer Nachteil der bisherigen Elektrolytsysteme auf Kaliumfluorid- oder Natriumfluoridbasis ist es, dass diese Komplexe aufgrund der geringen Stromdichtebelastbarkeit nur bei sehr geringen mittleren Stromdichten eingesetzt werden können. Dadurch sind lange Verweilzeiten in der Galvanisiertrommel notwendig, um die gewünschten Schichtdicken zu erreichen. Der Abrieb an den Teilen und auch auf der aufgetragenen Schicht ist daher sehr hoch und die Qualität der erhaltenen Schicht zu niedrig.

Auch die natriumfluoridhaltigen Komplexe, die bezüglich ihrer Stromdichtebelastbarkeit grundsätzlich besser als Kaliumfluoridkomplexe geeignet sind, besitzen eine so schlechte Streufähigkeit für die Beschichtung von Schüttgut oder Kleinteilen, wie zum Beispiel Schrauben oder Hohlnieten, dass sie ebenfalls nicht für die galvanische Beschichtung in Trommeln geeignet sind.

Aus älteren Dokumenten des Standes der Technik aus den Jahren 1959 - 1967 sind weiterhin auch so genannte Oniumkomplexe als Elektrolyte bekannt. Oniu m-komplexe sind Komplexe bei denen Natrium- oder Kaliumfluorid durch Ammoniumtetraalkylhalogenide ersetzt werden. Diese Elektrolytkomplexe wurden in den 60er Jahren beschrieben, aber niemals im industriellen Maßstab zur Beschichtung eingesetzt, weil die Abscheidung ein uneinheitliches Bild zeigte.

So beschreibt beispielsweise die DE 10 56 377 AS den Einsatz einer Elektrolytzusammensetzung $N(C_2H_5)_4Cl \cdot 2\,Al(C_2H_5)_3$ zur Abscheidung von Aluminium. Diese Elektrolytkomplexe werden jedoch direkt und ohne organische Lösungsmittel eingesetzt.

Sie besitzen den Nachteil, dass sie in dieser Form für eine industrielle Anwendung aufgrund der hohen Viskosität der flüssigen Verbindungen nicht geeignet sind. Aufgrund der hohen Viskosität kann es leicht zu einer Verschleppung des Elektrolyten kommen und damit aufgrund der leichten Entzündbarkeit des Elektrolyten zu einem erhöhten Sicherheitsrisiko. Weiterhin ist der Elektrolyt in dieser Form auch nicht für die Elektrolyse in einer galvanischen Trommel geeignet, weil es aufgrund der hohen Viskosität zu einem relativ schlechten Austausch des Elektrolyten zwischen Anode und Kathode kommt und die Gefahr besteht, dass aufgrund einer Verarmung des Elektrolyten in der Trommel die Abscheidung vollständig zum Erliegen kommt.

Ähnliche Elektrolyten werden auch in der DE 14 96 993 AS beschrieben. Diese besitzen Ammoniumalkylverbindungen mit Benzyl-, Phenyl- oder Cyclohexylgruppen sowie stark verzweigte Kohlenwasserstoffreste. Diese Elektrolytverbindungen werden ebenfalls in unverdünnter Form als Lösung eingesetzt, so dass hierfür dieselben Nachteile gelten, wie oben bereits erörtert. Weiterhin ist die elektrische Leitfähigkeit dieser Elektrolytsysteme sehr gering, so dass sie für die Elektrolyse in Galvanisiertrommeln nicht geeignet sind. So liegt die spezifische elektrische Leitfähigkeit des Elektrolyten $[N(C_2H_5)_3(C_6H_5CH_2)]Cl \cdot 2\,Al\,(C_2H_5)_3$ bei 8,6 mS/cm. Diese Leitfähigkeit ist für die Beschichtung in einer Galvanisiertrommel nicht ausreichend.

Die technische Aufgabe der Erfindung war es daher, ein Elektrolytsystem zur Verfügung zu stellen, das in idealer Weise für die Abscheidung von Aluminium auf Kleinteilen in einer Galvanisiertrommel geeignet ist.

Diese technische Aufgabe wird gelöst durch einen Elektrolyten zur galvanischen Abscheidung von Aluminium aus aprotischen Lösungsmitteln enthaltend eine Verbindung der Formel

$$N(R^1)_4X \cdot [(m\text{-}n\text{-}o)Al\,(C_2H_5)_3 \cdot n\,AlR^2_3 \cdot o\,AlR^3_3], \qquad\qquad (I)$$

wobei

$R^1$ eine $C_1$ bis $C_4$ Alkylgruppe ist,

X gleich F, Cl oder Br ist,

m gleich 1 bis 3, vorzugsweise 1,7 bis 2,3 ist,

n gleich 0,0 bis 1,5, vorzugsweise 0,0 bis 0,6 ist,

o gleich 0,0 bis 1,5, vorzugsweise 0,0 bis 0,6 ist

$R^2$ $R^3$ eine $C_1$ oder $C_3$ bis $C_6$ Alkylgruppe ist, wobei $R^2$ ungleich $R^3$ ist,

in einem organischen Lösungsmittel.

Die Elektrolyte gemäß der Erfindung besitzen den Vorteil gegenüber den bisher verwendeten natriumfluorid- und kaliumfluoridhaltigen Elektrolyten, dass sie insbesondere bei hohen Stromdichten keine Alkalimetall-Coabscheidung zeigen und dadurch eine gleichmäßige Aluminiumbeschichtung ohne Einbußen bei der Korrosionsbeständigkeit gewährleistet ist.

Weiterhin zeigen diese Elektrolyte auch keinerlei Neigung zu dendritischem Wachstum. Auch dies führt zu einer Qualitätserhöhung der Aluminiumschicht, auf dem zu beschichtenden Produkt.

Die Elektrolyte besitzen auch eine hohe Stromdichtebelastbarkeit und eine gute Leitfähigkeit. Die hohe Stromdichtebelastbarkeit führt dazu, dass bei der Beschichtung in Galvanisiertrommeln eine relativ hohe mittlere Stromdichte bezogen auf die Gesamtoberfläche der zu beschichtenden Ware möglich wird. Weiterhin ist ein Vorteil, dass die Beschichtungszeit in der Trommel erheblich geringer ist und somit eine geringere Gefahr besteht, dass durch die Trommelrotation, Beschädigungen und Abrieb bei den zu beschichtenden Teilen auftreten.

Die erfindungsgemäßen Elektrolyte besitzen auch eine sehr hohe Streufähigkeit, wodurch auch komplizierter geformte Kleinteile gut beschichtet werden können.

Es war weiterhin überraschend, dass durch eine geringe Verdünnung des Elektrolyten mit einem organischen Lösungsmittel, vorzugsweise Toluol, eine Leitfähigkeitserhöhung des Systems durch Erhöhung der Ionenbeweglichkeit von zwei bis vier mS/cm gemessen bei 95 °C erreicht werden konnte. Diese war für den Fachmann völlig überraschend, weil er damit rechnen musste, dass eine Verdünnung des Elektrolyten zu einer Herabsetzung der Leitfähigkeit führen würde.

In einer bevorzugten Ausführungsform ist die elektrische Leitfähigkeit des Elektrolyten gemäß der Erfindung größer 25 mS/cm bei 95 °C, vorzugsweise zwischen 28 und 35 mS/cm bei 95 °C.

Die Messung der Leitfähigkeit erfolgt mittels einer handelsüblichen Leitfähigkeitsmesssonde (z.B. TetraCon 325 Pt der Firma WTW) in einem in einem Ölbad auf 95 °C temperierten Glasgefäß, in dem sich unter einer Argonatmosphäre 25 mL Elektrolyt befinden.

In bevorzugter Weise wird als organisches Lösungsmittel ein Lösungsmittel ausgewählt aus der Gruppe Toluol, Xylol oder Benzol oder Mischungen derselben eingesetzt. Im Elektrolyten ist das Lösungsmittel in einer Konzentration von 1 bis 4 Mol, vorzugsweise 2 Mol, pro Mol Komplexverbindung enthalten. In besonders bevorzugter Weise besitzt die Verbindung der allgemeinen Formel I die Zusa m-ensetzung $N(C_2H_5)_4Cl \cdot 2Al(C_2H_5)_3 \cdot 2$ Toluol oder $N(C_2H_5)_4Cl \cdot 1,5\,Al(C_2H_5)_3 \cdot 0,5\,Al(CH_3)_3 \cdot 2$ Toluol oder $N(C_2H_5)_4Cl \cdot 1,5\,Al(C_2H_5)_3 \cdot 0,5\,Al(C_4H_9)_3 \cdot 2$ Toluol.

Ein weiterer Gegenstand der Erfindung ist ein Verfahren zur Herstellung des Elektrolyten. Zur Herstellung des Elektrolyten wird zunächst die Tetraalkylammoniumhalogenverbindung zur Entfernung von Feuchtigkeit getrocknet. Anschließend wird die getrocknete Substanz in einem organischen aprotischen Lösungsmittel, vorzugsweise Toluol, suspendiert. Es wird/werden dann die Aluminiumtrialkylverbindungen oder Mischungen aus Aluminiumtrialkylverbindungen unter Kühlung zugetropft bis eine klare Lösung des fertigen Reaktionsproduktes entsteht. Der Elektrolyt wird vorzugsweise verwendet zur galvanischen Aluminiumabscheidung auf Werkstoffteilen. Diese Werkstoffteile sind ausgewählt aus der Gruppe Metalle, Legierungen, Keramik, Kunststoffe oder Verbundwerkstoffen aus einem oder mehreren dieser Werkstoffe. In bevorzugter Weise werden die zu beschichtenden Werkstoffteile in einer Beschichtungstrommel angeordnet und in dieser Beschichtungstrommel mit Aluminium beschichtet.

Das Beschichtungsverfahren erfolgt über mehrere Verfahrensschritte. Zunächst werden die gegebenenfalls vorbehandelten zu beschichtenden Teile in die Beschichtungstrommel überführt. Die Beschichtungstrommel taucht in den erfindungsgemäßen Elektrolyten ein. Es wird dann ein kathodischer Strom an die Beschichtungstrommel angelegt und ein anodischer Strom an die in der Elektrolytlösung angeordneten Aluminiumanoden. Dabei scheidet sich auf den zu beschichtenden Teilen eine Aluminiumschicht ab und die Aluminiumanoden lösen sich auf. Anschließend erfolgt das Entfernen der Teile aus der Beschichtungstrommel und das Trocknen der Teile.

Beispiele für einige typische Betriebsparameter, bei denen die erfindungsgemäßen Elektrolyte in Galvanisiertrommeln betrieben werden, sind eine Betriebstemperatur der Elektrolytlösung von 90 bis 100°C, eine Zellenspannung von 10 bis 40 V und eine mittlere Stromdichte von 0,4 - 1,0 A/dm$^2$, wobei die Stromdichte an der Hüllfläche der Galvanisiertrommel bei 4 bis 6 A/dm$^2$ liegt. Die Abscheidegeschwindigkeit auf den zu beschichtenden Waren beträgt 10 bis 12 $\mu$m pro Stunde bei einer mittleren Stromdichte von 1 A/dm$^2$.

Ein weiterer Gegenstand der Erfindung sind nach dem erfindungsgemäßen Verfahren hergestellte, mit Aluminium beschichtete Teile.

Der erfindungsgemäße Elektrolyt weist insbesondere gegenüber den natriumfluorid- oder kaliumfluoridhaltigen Elektrolyten des Standes der Technik erhebliche Vorteile bezüglich des dendritischen Wachstums auf. So wurden Versuchsreihen gefahren mit einem Elektrolyten der Zusammensetzung NaF•2Al(C$_2$H$_5$)$_3$ • 2 Toluol. Bei einer Beschichtung mit diesem Elektrolyten kam es auf den als Probenkörper verwendeten Spaltblechen zu starkem dendritischen Kantenwachstum. Bei Verwendung eines erfindungsgemäßen Elektrolyten, beispielsweise N(C$_2$H$_5$)$_4$Cl • 2 Al(C$_2$H$_5$)$_3$ • 2 Toluol zeigte sich, dass kein dendritisches Wachstum auftritt und eine glatte Oberflächenschicht an der Kante erzielt wurde. Auch dies beweist die Überlegenheit des erfindungsgemäßen Elektrolyten zu den bisher verwendeten natriumfluorid- oder kaliumfluoridhaltigen Elektrolyten.

Die maximale Stromdichtebelastbarkeit des erfindungsgemäßen Elektrolyten liegt im Bereich von 5-6 A/dm$^2$, wohingegen die Stromdichtebelastbarkeit des entsprechenden kaliumfluoridhaltigen Elektrolyten im Bereich von 1-1,5 A/dm$^2$ des Natriumfluoridelektrolyten im Bereich von 3-4 A/dm$^2$ und des ammoniumbenzylhaltigen Elektrolyten bei 1,5 A/dm$^2$ liegt. Aufgrund der hohen Stromdichtebelastbarkeit des erfindungsgemäßen Elektrolyten ist eine wirtschaftliche Abscheidung in kurzer Zeit in einer Galvanisiertrommel möglich, ohne dass die Teile beschädigt werden. Dabei wird eine ausgezeichnete Beschichtung hoher Qualität erhalten.

Die nachfolgenden Beispiele sollen die Erfindung näher erläutern.

## BEISPIELE

### 1. Herstellung des Elektrolyten

Tetraethylammoniumchlorid, das als Monohydrat käuflich erworben werden kann, wird im Vakuum getrocknet. 1 Mol des getrockneten Tetraethylammoniumchlorid wird mit Toluol vermischt, so dass eine Suspension erhalten wird. In diese Suspension wird unter Kühlung 2 Mol Triethylaluminium, das als Reinsubstanz oder als toluolische Lösung eingesetzt wird, zugetropft. Die Reaktionsmischung wird gerührt. Man erhält eine klare Lösung von N(C$_2$H$_5$)$_4$Cl• 2 Al(C$_2$H$_5$)$_3$ • 2 Toluol. Toluol als Lösungsmittel wird in einer Menge von 2 Mol bezogen auf die eingesetzte Menge Tetraethylammoniumchlorid verwendet. Das erhaltene Produkt wird als Elektrolyt eingesetzt.

### 2. Leitfähigkeit des erfindungsgemäßen Elektrolyten im Vergleich zur elektrischen Leitfähigkeit von Elektrolyten des Standes der Technik

Für eine ausreichende Beschichtung, insbesondere von Kleinteilen in galvanischen Trommeln ist eine ausreichende elektrische Leitfähigkeit des Elektrolyten eine Grundvoraussetzung. Die Leitfähigkeit des erfindungsgemäßen Elektrolyten ist im Vergleich zu den Elektrolyten des Standes der Technik, die Natriumfluorid oder Kaliumfluorid enthalten, erheblich höher. Weiterhin wurde überraschenderweise gefunden, dass ein nichttoluolhaltiger Elektrolyt eine geringere elektrische Leitfähigkeit besitzt als der erfindungsgemäße Elektrolyt, der 2 Mol Toluol enthält. Die nachfolgende Tabelle zeigt einen Vergleich der einzelnen Leitfähigkeiten der Elektrolyte gemäß der Erfindung und der Elektrolyte des Standes der Technik.

*Tabelle 1: Leitfähigkeit*

| Verbindung | elektrische Leitfähigkeit [mS/cm] 95°C |
|---|---|
| $N(C_2H_5)_4Cl \cdot 1,5\,Al(C_2H_5)_3 \cdot 0,5\,Al(CH_3)_3 \cdot 2$ Toluol | 31-32 |
| $N(C_2H_5)_4Cl \cdot 2\,Al(C_2H_5)_3 \cdot 2$ Toluol | 29-31 |
| $NaF \cdot 2\,Al(C_2H_5)_3 \cdot 2$ Toluol | 26-27 |
| $KF \cdot 2\,Al(C_2H_5)_3 \cdot 2$ Toluol | 24-26 |
| $N(CeH_5CH_2)(C_2H_5)_3Cl \cdot 2\,Al(C_2H_5)_3$ | 8,6 |

**3. Beschichtung von Spaltblechen**

Für die Beschichtung wurden Messingspaltbleche verwendet. Die eingesetzten Spaltbleche für die Beschichtungsversuche hatten folgende Abmessungen: Breite 20 mm, gestreckte Länge 100 mm. Vor der Beschichtung wurden der untere Bereich des Spaltbleches von 25 mm um 180 ° umgebogen, so dass ein im Längsschnitt J-förmiges Blech mit einer Spaltbreite von 1 mm zwischen den beiden Schenkeln entsteht. Nach der Beschichtung konnte nach Aufbiegen des Bleches das Maß der Aluminiumabscheidung in dem Spalt zwischen den beiden Schenkeln und somit die Streufähigkeit des Elektrolytsystems beurteilt und mit weiteren Beschichtungsversuchen bei anderen Beschichtungsparametern oder Elektrolytzusammensetzungen verglichen werden.

Als Aluminiumanoden wurden 15 mm breite Anoden eingesetzt, um insbesondere auch Versuche zur Langzeitabscheidung möglich zu machen. Als Elektrolyt wurde $N(C_2H_5)_4Cl \cdot 2\,Al(C_2H_5)_3 \cdot 2$ Toluol eingesetzt. Bei den Versuchen wurden weiterhin auch die kathodischen und anodischen Ausbeuten berechnet in Abhängigkeit der Belastung des Elektrolyten mit Strom (in Ah/L). Die sichtbaren Elektrodeneffekte an den Anoden wie Gasentwicklung und Belagbildung wurden geprüft.

Beschichtungsversuch 1

Bei einer Stromstärke von 350 mA (entsprechend einer Stromdichte von 2,5 A/dm$^2$) und einer Spannung von 2,4 V wurde ein Spaltblech 30 min lang beschichtet. Die Beschichtung zieht sofort nach dem Einschalten des Beschichtungsstromes gleichmäßig auf dem Blech auf. Die Beschichtung ist weiß, glatt, einheitlich und matt. Es treten keine dendritischen Erscheinungen auf. Die Kanten sind auch unter dem Mikroskop glatt. Auch die Innenseite des Spaltbleches ist vollständig beschichtet. Der Elektrolyt zeigt eine hervorragende Streufähigkeit. Die Struktur der Beschichtung ist feinkristallin und qualitativ hochwertig. Es wird keine Gasentwicklung an den Aluminiumanoden beobachtet.

Beschichtungsversuch 2

Eine weitere Beschichtung eines Spaltbleches wurde bei einer Stromstärke von 450 mA (entsprechend einer Stromdichte von 3,2 A/dm$^2$), bei einer Spannung von 2,4 V, in 30 min vorgenommen. Es wurde der gleiche Elektrolyt wie in Beispiel 1 verwendet. Auch hier wurden weiße, glatte, seidenglänzende Schichten erhalten, die keine dendritischen Erscheinungen an den Kanten aufwiesen. Auch die Innenseite des Spaltbleches war vollständig beschichtet. Die Struktur war feinkristallin und es wurde keine Gasentwicklung an den Anoden beobachtet.

Beschichtungsversuch 3

In einem weiteren Beschichtungsversuch in einem Elektrolyt der Zusammensetzung $N(C_2H_5)_4Cl \cdot 1,5\,Al(C_2H_5)_3 \cdot 0,5\,Al(CH_3)_3 \cdot 2$ Toluol wurde wieder ein Spaltblech bei einer Stromstärke von 450 mA (entsprechend einer Stromdichte von 3,2 A/dm$^2$) und einer Zeitdauer von 30 Minuten beschichtet. Es wurde eine glatte silberhelle Schicht mit leichten Schattierungen erhalten ohne raue Stellen oder dendritischem Wachstum an Kanten und Spitzen.

Beschichtungsversuch 4

Im Elektrolyt der Zusammensetzung von Versuch 3 wurde ein Spaltblech mit einer Stromstärke von 600 mA (entsprechend einer Stromdichte von 4,3 A/dm$^2$) und einer Spannung von 2,78V 30 Minuten beschichtet. Die erreichte Schichtstärke betrug ca. 25 $\mu$m. Die erhaltene Schicht war silberhell mit leicht glänzenden Bereichen und feinkristallin ohne Dendrite an Kanten und Spitzen. Das Blech war im Kantenbereich vollständig beschichtet.

Weitere Beschichtungsversuche

Mit den erfindungsgemäßen Elektrolyten N(C$_2$H$_5$)$_4$Cl • 2 Al(C$_2$H$_5$)$_3$ • 2 Toluol, N(C$_2$H$_5$)$_4$Cl • 1,5 Al(C$_2$H$_5$)$_3$ • 0,5 Al(CH$_3$)$_3$ • 2 Toluol und N(C$_2$H$_5$)$_4$Cl • 1,5 Al(C$_2$H$_5$)$_3$ • 0,5 Al(CH$_3$)$_3$ • 2 Toluol wurden weitere Beschichtungsversuche durchgeführt. In allen Fällen wurden qualitativ hochwertige Schichten erhalten. Auch die Innenseiten der Spaltbleche wurden ausreichend beschichtet. Es traten keine dendritischen Erscheinungen an den Spaltblechkanten auf und eine Gasentwicklung an den Anoden fand nicht statt.

## 4. Untersuchung des dendritischen Wachstums

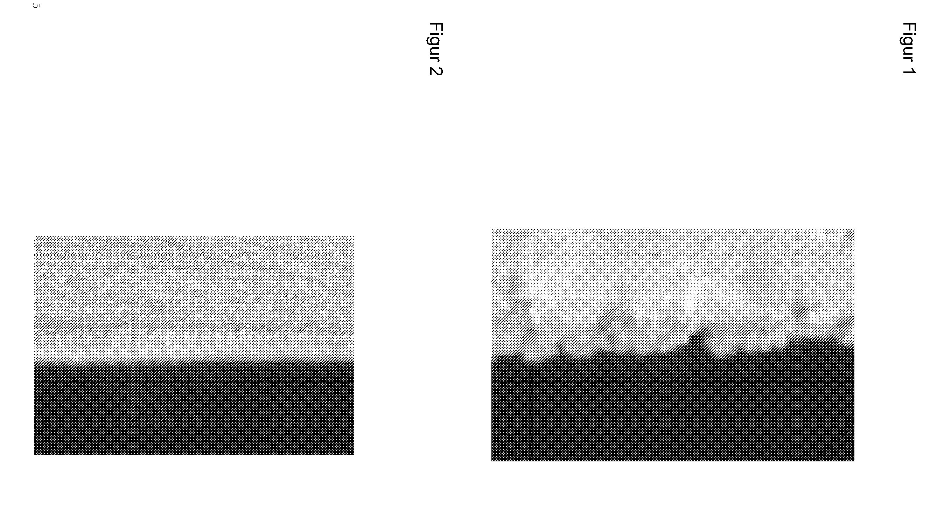

Es wurden vergleichende Versuche zum dendritischen Wachstum mit dem Elektrolyt gemäß der Erfindung N(C$_2$H$_5$)$_4$Cl • 2 Al(C$_2$H$_5$)$_3$ • 2 Toluol und einem Elektrolyt des Standes der Technik NaF • 2 Al(C$_2$H$_5$)$_3$ • 2 Toluol durchgeführt. Die Beschichtung erfolgte unter denselben Stromstärke-, Spannungs- und Zeitbedingungen für beide Elektrolyte. Die Beschichtung wurde durchgeführt bei 350 mA für eine Beschichtungszeit von 60 min, insbesondere um das Kantenwachstum besser vergleichen zu können. Die mikroskopischen Aufnahmen der Kanten, die nachfolgend abgebildet sind, zeigen deutliche Unterschiede bei dem natriumfluoridhaltigen Elektrolyten des Standes der Technik im Vergleich zu dem Elektrolyten der Erfindung. Die Beschichtung, die durch den Elektrolyten des Standes der Technik erzeugt wurde, zeigt an den Kanten ein deutliches dendritisches Wachstum und keine glatte Struktur (siehe Figur 1). Der Elektrolyt der Erfindung zeigt an der Kante keinerlei dendritisches Wachstum und eine klare, glatte Beschichtung (siehe Figur 2).

Diese Dendrite sind für eine Beschichtung äußerst schädlich. Sie sind brüchig und werden insbesondere bei der galvanischen Beschichtung in Trommeln zu losen Partikeln zermahlen und zementieren sich während der Beschichtung als Ablagerung auf der zu beschichtenden Ware. Diese Aufplattierung und der teilweise Einbau in die Aluminiumschichten führt dazu, dass die Produkte unbrauchbar werden, weil zum Beispiel Ablagerungen in Gewinden der Ware zu einer Nichtgängigkeit des Gewindes führen oder zu sehr hohen Reibungswerten. Weiterhin werden dadurch auch massliche Toleranzen nicht eingehalten.

Der erfindungsgemäße Elektrolyt zeigt keinerlei dendritisches Wachstum und kann eine Aluminiumschicht erzeugen, die glatt und von hoher Qualität ist und die oben beschriebenen Nachteile nicht aufweist.

## 5. Langzeitstabilität des Elektrolyten

Es wurde weiterhin auch die Langzeitstabilität des erfindungsgemäßen Elektrolyten N(C$_2$H$_5$)$_4$Cl · 2 Al(C$_2$H$_5$)$_3$ · 2 Toluol untersucht. Dabei wurden insgesamt drei Anodensätze verbraucht. Es wurden Beschichtungsdauern bis zu 64 Stunden bei einer Stromdichte von 0,63 bis 2,2 A/dm$^2$ durchgeführt. Die Gesamtbelastung des Elektrolyten nach dem ersten Anodensatz betrug 417 Ah/L mit acht Beschichtungen und nach dem zweiten Anodensatz 748 Ah/L mit weiteren fünf Beschichtungen.

Bei diesen Langzeitversuchen zeigte sich, dass die anodische Ausbeute des Systems annähernd 100 % ist und dass trotz der langen Standzeit des Elektrolyten in allen Versuchen ausreichende und qualitativ hochwertige Beschichtungen erzielt werden konnten. Dies zeigt, dass der erfindungsgemäße Elektrolyt N(C$_2$H$_5$)$_4$Cl · 2 Al(C$_2$H$_5$)$_3$ · 2 Toluol geeignet ist, auch in der industriellen Anwendung eingesetzt zu werden, da er langzeitstabil ist und für viele Beschichtungszyklen verwendet werden kann.

Weiterhin wurde auch festgestellt, dass bei längerem Stillstand der Anlage und Abkühlung des Elektrolyten auf 15°C keinerlei Auskristallisation im Elektrolyten festzustellen war, so dass auch hier die Stabilität des Elektrolyten verifiziert werden konnte.

Der erfindungsgemäße Elektrolyt ist daher eine sinnvolle Verbesserung des bisher verwendeten Elektrolyten auf Natriumfluorid- oder Kaliumfluoridbasis, weil er bessere Eigenschaften besitzt und zu qualitativ höherwertigen Aluminiumabscheidungen führt. So besteht bei dem erfindungsgemäßen Elektrolyten keine Möglichkeit einer Natrium- oder Kalium-Coabscheidung. Es ist keine Dendritenbildung zu beobachten. Die Stromdichtebelastbarkeit und die Streufähigkeit des Elektrolyten ist sehr hoch und der erfindungsgemäße Elektrolyt besitzt weiterhin auch eine hohe Langzeitstabilität, so dass er wirtschaftlich in industriellen Großverfahren eingesetzt werden kann.

## Patentansprüche

**1.** Elektrolyt zur galvanischen Abscheidung von Aluminium aus aprotischen Lösungsmitteln enthaltend eine Verbindung der Formel

$$N(R^1)_4 X • (m-n-o)Al (C_2H_5)_3 • n\ AlR^2_3 • o\ AlR^3_3, \qquad (I)$$

wobei

$R^1$ eine $C_1$ bis $C_4$ Alkylgruppe ist,

X gleich F, Cl oder Br ist,

m gleich 1 bis 3, vorzugsweise 1,7 bis 2,3 ist,

n gleich 0,0 bis 1,5, vorzugsweise 0,0 bis 0,6 ist,

o gleich 0,0 bis 1,5, vorzugsweise 0,0 bis 0,6 ist

$R^2$, $R^3$ eine $C_1$ oder $C_3$ bis $C_6$ Alkylgruppe ist, wobei $R^2$ ungleich $R^3$ ist.

in einem organischen Lösungsmittel.

2. Elektrolyt nach Anspruch 1, **dadurch gekennzeichnet, dass** die elektrische Leitfähigkeit des Elektrolyten größer 25 mS/cm bei 95 °C ist.

3. Elektrolyt nach Anspruch 1 oder 2, **dadurch gekennzeichnet, dass** das organi-sche Lösungsmittel ausgewählt ist aus der Gruppe Toluol, Xylol oder Benzol oder Mischungen derselben.

4. Elektrolyt nach einem oder mehreren der Ansprüche 1 bis 3, **dadurch gekennzeichnet, dass** das Lösungsmittel in einer Konzentration von 1 bis 4 Mol pro Mol Verbindung bezogen auf die eingesetzte Menge Tetraalkylammonium-Verbindung enthalten ist.

5. Elektrolyt nach einem oder mehreren der Ansprüche 1 bis 4, **dadurch gekennzeichnet, dass** die Verbindung die Zusammensetzung $N(C_2H_5)_4Cl \cdot 2\ Al(C_2H_5)_3 \cdot 2$ Toluol besitzt.

6. Elektrolyt nach einem oder mehreren der Ansprüche 1 bis 4, **dadurch gekennzeichnet, dass** die Verbindung die Zusammensetzung $N(C_2H_5)_4Cl \cdot 1,5\ Al(C_2H_5)_3 \cdot 0,5\ Al(CH_3)_3 \cdot 2$ Toluol oder $N(C_2H_5)_4Cl \cdot 1,5\ Al(C_2H_5)_3 \cdot 0,5\ Al(C_4H_9)_3 \cdot 2$ Toluol oder $N(C_2H_5)_4Cl \cdot 1,5\ Al(C_2H_5)_3 \cdot 0,5\ Al(CH_3)_3 \cdot 2$ Toluol besitzt.

7. Verfahren zur Herstellung des Elektrolyten nach den Ansprüchen 1 bis 6, **gekennzeichnet durch** die folgenden Verfahrensschritte:

   i) Trocknen der Verbindung $N(R^1)_4X$ zur Entfernung von Feuchtigkeit,
   ii) Zubereiten einer Suspension aus der getrockneten Verbindung $N(R^1)_4X$ in einem organischen aprotischen Lösungsmittel.
   iii) Zugabe der Aluminiumalkyle oder der Mischungen von Aluminiumalkylen **durch** Zutropfen unter Kühlung bis eine klare Lösung entsteht,

   wobei X, m, n, o, $R^1$, $R^2$, $R^3$ dieselbe Bedeutung haben wie in Anspruch 1.

8. Verwendung des Elektrolyten nach den Ansprüchen 1 bis 6 zur galvanischen Aluminiumabscheidung auf Werkstoffteilen.

9. Verwendung nach Anspruch 8, **dadurch gekennzeichnet, dass** die Werkstoffteile ausgewählt sind aus der Gruppe Metalle, Legierungen, Keramik, Kunststoffe oder Verbundwerkstoffen aus einem oder mehreren dieser Werkstoffe.

10. Verwendung nach Anspruch 8 oder 9, **dadurch gekennzeichnet, dass** die zu beschichtenden Werkstoffteile in einer Beschichtungstrommel angeordnet sind und dort mit Aluminium beschichtet werden.

11. Verfahren zur Beschichtung von Werkstoffteilen mit Aluminium **gekennzeichnet durch** die folgenden Verfahrensschritte:

   i) Einbringen der zu beschichtenden Teile in eine Beschichtungstrommel,
   ii) Eintauchen der Beschichtungstrommel in einen Elektrolyten gemäß einem oder mehreren der Ansprüche 1 bis 6,
   iii) Anlegen eines kathodischen Stromes an die Beschichtungstrommel und eines anodischen Stromes an die Al-Elektroden, die in dem Elektrolyt nach Ansprüchen 1 bis 6 angeordnet sind, wobei sich auf den in der Beschichtungstrommel befindlichen Teilen Aluminium abscheidet,
   iv) Beschichtung der Teile mit Aluminium
   v) Entfernen der Teile aus der Beschichtungstrommel und Trocknen der Teile

**12.** Nach dem Verfahren gemäß Anspruch 11 hergestellte mit Aluminium beschichtete Teile.

Figur 1

Figur 2

Europäisches
Patentamt

**EUROPÄISCHER RECHERCHENBERICHT**

Nummer der Anmeldung

EP 06 12 5040

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 505 886 A (SIEMENS AG [DE]) 30. September 1992 (1992-09-30) * Ansprüche 1-3 * * Spalte 1, Zeilen 20-31 * * Spalte 2, Zeilen 15-18,27-30 * * Spalte 4, Zeilen 9-11 * ----- | 1-4,6, 8-12 | INV. C25D3/44 C07F5/06 |
| X | WO 02/088434 A (ALUMIPLATE INC [US]; FISCHER JUERGEN K S [US]) 7. November 2002 (2002-11-07) * Ansprüche 1-7,11,21,23,28 * * Seite 7, Zeile 1 - Seite 8, Zeile 7; Beispiele 1-3 * * Seite 12, Zeilen 15-33 * ----- | 1-5,8-12 | |
| X | US 4 032 413 A (DOTZER RICHARD ET AL) 28. Juni 1977 (1977-06-28) * Ansprüche 1,5; Beispiel 3 * * Spalte 2, Zeilen 41-49 * * Spalte 3, Zeilen 19-34,48-52 * ----- | 1-5,8-12 | |
| D,X | EP 0 084 816 A2 (SIEMENS AG [DE]) 3. August 1983 (1983-08-03) * Seite 5, Zeile 1 - Seite 6, Zeile 9 * ----- | 7 | RECHERCHIERTE SACHGEBIETE (IPC) C25D C07F |
| A | US 3 448 127 A (DOTZER RICHARD) 3. Juni 1969 (1969-06-03) * Beispiel 1 * ----- | 7 | |

Der vorliegende Recherchenbericht wurde für alle Patentansprüche erstellt

| Recherchenort | Abschlußdatum der Recherche | Prüfer |
|---|---|---|
| Den Haag | 26. April 2007 | Gault, Nathalie |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 06 12 5040

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-04-2007

| Im Recherchenbericht angeführtes Patentdokument | Datum der Veröffentlichung | Mitglied(er) der Patentfamilie | Datum der Veröffentlichung |
|---|---|---|---|
| EP 0505886 A | 30-09-1992 | KEINE | |
| WO 02088434 A | 07-11-2002 | KEINE | |
| US 4032413 A | 28-06-1977 | AR 215577 A1 | 31-10-1979 |
| | | AT 336972 B | 10-06-1977 |
| | | AT 647575 A | 15-09-1976 |
| | | BE 835119 A1 | 16-02-1976 |
| | | BR 7507472 A | 10-08-1976 |
| | | CH 602944 A5 | 15-08-1978 |
| | | DE 2453830 A1 | 20-05-1976 |
| | | ES 442591 A1 | 16-04-1977 |
| | | FR 2291293 A1 | 11-06-1976 |
| | | GB 1522680 A | 23-08-1978 |
| | | IT 1048623 B | 20-12-1980 |
| | | JP 1182672 C | 27-12-1983 |
| | | JP 51072933 A | 24-06-1976 |
| | | JP 58014518 B | 19-03-1983 |
| | | NL 7511889 A | 17-05-1976 |
| | | SE 7512590 A | 14-05-1976 |
| | | ZA 7507119 A | 29-12-1976 |
| EP 0084816 A2 | 03-08-1983 | CA 1209157 A1 | 05-08-1986 |
| | | DE 3202265 A1 | 28-07-1983 |
| | | DK 25183 A | 26-07-1983 |
| | | ES 8403490 A1 | 16-06-1984 |
| | | JP 1359037 C | 13-01-1987 |
| | | JP 58171591 A | 08-10-1983 |
| | | JP 61022038 B | 29-05-1986 |
| | | US 4417954 A | 29-11-1983 |
| US 3448127 A | 03-06-1969 | AT 252943 B | 10-03-1967 |
| | | AT 254210 B | 10-05-1967 |
| | | CH 461484 A | 31-08-1968 |
| | | DE 1200817 B | 16-09-1965 |
| | | FR 1429264 A | 25-02-1966 |
| | | GB 1062464 A | 22-03-1967 |
| | | NL 6401828 A | 01-10-1964 |
| | | NL 7511497 A | 30-01-1976 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1047450
- EP 0084816 A1
- EP 0402760 A1
- EP 0402761 A1
- DE 19649000 C2
- EP 1680533 A1
- WO 03012176 A1
- WO 2005021840 A1
- DE 1056377
- DE 1496993